# EUROPÄISCHE PATENTSCHRIFT

(11) **EP 1 414 670 B1**
(45) Veröffentlichungstag und Bekanntmachung des Hinweises auf die Patenterteilung: **24.12.2008**
(21) Anmeldenummer: 02764816.1
(22) Anmeldetag: 31.07.2002
(51) Int. Cl.: B60N 2/46, A47C 1/03, A47C 7/54

(54) **SITZ**
SEAT
SIEGE

(30) Priorität: 08.08.2001 DE 10138926
(43) Veröffentlichungstag der Anmeldung: 06.05.2004
(73) Patentinhaber: Recaro Aircraft Seating GmbH & Co. KG, 74523 Schwäbisch Hall (DE)
(72) Erfinder: BAUER, Jürgen, 71560 Sulzbach (DE); ROSSI, Mauro, 88097 Eriskirch (DE)
(74) Vertreter: Daub, Thomas
(86) Internationale Anmeldenummer: PCT/EP2002/008514
(87) Internationale Veröffentlichungsnummer: WO 2003/013904

(56) Entgegenhaltungen:
- DE-A- 3 814 758
- DE-C- 19 612 287
- US-A- 4 968 095

## Beschreibung

Die Erfindung betrifft einen Sitz, insbesondere Fahrzeugsitz, vorzugsweise Fluggastsitz, gemäß der Merkmalsausgestaltung des Oberbegriffes des Patentanspruches 1.

Durch die DE 197 24 763 A1 ist ein Fahrzeugsitz, insbesondere Fluggastsitz, bekannt mit einer Neigungseinstelleinrichtung, mittels der die Rückenlehne um eine Schwenkachse gegenüber dem Sitzteil schwenkbar ist. Dadurch, daß die Position der Schwenkachse aus einem Bereich zwischen Rückenlehne und Sitzteil derart über einen Hebeltrieb verlagert ist, daß die Schwenkachse in Höhe des Hüftpunktes des jeweiligen Sitzbenutzers angeordnet ist, ist eine Relativbewegung zwischen der Rückenlehne einerseits und dem Rücken des Sitzbenutzers andererseits vermieden, so daß sich der sog. Hemdauszieheffekt bei Zurückneigen der Rückenlehne nicht einstellen kann. Der dahingehende Fahrzeugsitz verfügt bereits über ein hohes Maß an Sitzkomfort; jedoch sind die Armlehnen beiderseits des Sitzes im wesentlichen in einer horizontalen Lage gehalten, was sich insbesondere bei weit zurückgeneigter Rückenlehne für den Sitzbenutzer im Hinblick auf einen vorteilhaften Sitzkomfort als ungünstig erweist. Demgemäß wäre es wünschenswert, gleichfalls eine Einstellmöglichkeit für die jeweilige Armlehne zu schaffen.

Der Stand der Technik bietet dahingehende Anregungen, auch eine Einstellmöglichkeit für die Armlehne bzw. Armauflage vorzusehen. So betrifft die DE 196 12 287 C1 ein Sitzmöbel, insbesondere eine Behandlungsliege mit einer Sitzfläche und einer im Neigungswinkel einstellbaren Rückenlehne. Ferner weist das bekannte Sitzmöbel mindestens eine Armlehne auf, die aus einem oberen Stützteil und einem unteren Führungsteil besteht, wobei das Stützteil um eine horizontale, an einer Seite der Rückenlehne angeordnete Achse verschwenkbar und auf dieser Achse lösbar befestigt ist. Ferner ist das Führungsteil der Armlehne entlang einer ortsfesten Führung gleitbar geführt und weist dabei eine solche Form auf, daß das Stützteil bei Verschwenken um die Achse eine translatorische Bewegung ausführt, die bestimmt ist durch eine Evolventenform des Führungsteils. Aufgrund dieser mechanischen Zwangskopplung befindet sich die Armauflage der jeweiligen Armlehne während der gesamten Neigungswinkeleinstellung der Rükkenlehne in einer horizontalen, sich fortlaufend absenkenden Stellung, die beim Verlagern von einer sitzenden in eine liegende Position entsteht. Wenn jedoch die Rückenlehne sich nicht völlig in der horizontalen Stellung befindet, empfindet es ein Sitzbenutzer als unangenehm bei teilgeneigter Rückenlehne, die Arme in einer horizontalen Lage auf der Armauflage halten zu müssen.

Vergleichbares gilt auch für die Armauflagen, wie sie in der DE 43 10 454 C1 und der DE 195 42 198 A1 beschrieben sind, bei dem die jeweilige Armauflage über schwenkbeweglich gelagerte Parallelogrammlenker sich aus einer Nichtgebrauchsstellung in eine Gebrauchsstellung schwenken läßt, bei der gleichfalls unabhängig von der Neigungseinstellung der Rükkenlehne die Armauflage im wesentlichen horizontal verlaufend auf- und absenkbar ist.

Durch die DE 38 14 758 A1 ist als nächstkommender Stand der Technik ein Fahrzeugsitz mit Sitzteil bekannt, wobei die Seitenholme einer Rückenlehne mit dem Rahmen eines Sitzteils über eine Schwenkachse gelenkig verbunden sind. Jeder Lehnen-Seitenholm bei der bekannten Lösung weist oberhalb der Schwenkachse einen Achszapfen auf, an dem eine Armstütze drehbeweglich gelagert ist, die mit einem am Sitzteil gelagerten Lenker eine Parallelogrammabstützung bildend in Verbindung steht. Die Armstütze ist hierdurch unabhängig von der Schräglage der Rückenlehne in einer Parallellage zum Sitzteil gehalten, wobei bei der Neigungseinstellbewegung der Rückenlehne die Armlehne bei ihrer Absenkbewegung derart weit in rückwärtige Lage mitgeführt wird, daß dergestalt die Auflagemöglichkeit für die Arme des Sitzbenutzers reduziert ist. Des weiteren benötigt die bekannte Lösung eine Vielzahl an Kopplungsstangen, die von einem Drehbeschlag angesteuert werden, was die bekannte Lösung konstruktiv schwer werden läßt, so daß sie erfolgreich bisher nur im Kraftfahrzeugbereich Anwendung gefunden hat.

Ausgehend von diesem Stand der Technik liegt daher der Erfindung die Aufgabe zugrunde, einen Sitz, insbesondere Fluggastsitz, zu schaffen, der auch erhöhten Komfortanforderungen gerecht wird, insbesondere auch für den Fall, daß die Rückenlehne in einer teilgeneigten Stellung sich befindet, die zwischen einer aufrechten Sitzposition und einer nach Möglichkeit weitgehend horizontalen Liegeposition angeordnet ist. Darüber hinaus soll die angestrebte Lösung wenig Einbauraum und Gewicht zu ihrer Realisierung benötigen. Eine dahingehende Aufgabenstellung löst ein Sitz mit den Merkmalen des Patentanspruches 1 in seiner Gesamtheit.

Dadurch, daß gemäß dem kennzeichnenden Teil des Patentanspruches 1 die zweite Gelenkstelle am unteren Ende des Sitzteilträgers angeordnet ist, an der ein Ende eines Lenkerteils angeordnet ist, daß das gegenüberliegende Ende des Lenkerteils eine bewegbare dritte Gelenkstelle darstellt, die eine Führung für die Armlehne bildet, daß die Anlenkung der Armlehne an die Rückenlehne die vierte Gelenkstelle bildet, daß am Lenkerteil im Bereich der zweiten Gelenkstelle ein Steuerteil mit einem Ende mittels einer fünften Gelenkstelle angreift, daß das Steuerteil mit seinem anderen freien Ende mittels einer weiteren sechsten Gelenkstelle an der Rückenlehne angreift und daß in jeder Neigungseinstellung der Rückenlehne die sechste Gelenkstelle unterhalb der vierten Gelenkstelle verbleibt, über die die Armlehne mit der Rückenlehne schwenkbar verbunden ist, ist eine Parallelogrammführung der Armlehne erreicht mit der eine Selbstabsenkung derselben möglich ist und, sofern die Rückenlehne praktisch in eine Liegelage verbracht werden soll, bei der das genannte Parallelogramm bei einer mittleren Neigungslage der Rückenlehne geometrisch einer fiktiven Linie folgt, indem die vier Gelenkstellen des Parallelogramms auf einer Linie liegen, wird eine dahingehende kritische Totpunktlage problemlos überwunden, indem das Steuerteil mit seinen weiteren Gelenkstellen eine Art Hilfs-Parallelogramm ausbildet, das in der genannten Totpunktlage des ersten Parallelogramms mit seinen vier Gelenkstellen in "aufgespannter" Lage bleibt.

Neben einem hemmnisfreien Betrieb behält die Armauflage bezogen auf die Neigungsbewegung der Rückenlehne dann im wesentlichen in Längsrichtung gesehen ihre Lage bei und senkt sich nur mit zunehmender Neigung der Rückenlehne zusehends ab, so daß für einen Sitzbenutzer nach wie vor der gesamte Armauflagebereich auch in einer Liegestellung zur Verfügung steht. Durch die wenig benötigten Bauteile ist die erfindungsgemäße Lösung kostengünstig und benötigt wenig Gewicht, was im Bereich der Luftfahrt eine besondere Rolle spielt, um dergestalt Treibstoffkosten zu sparen. Da darüber hinaus die wesentlichen Teile der Einstellparallelogramme im Bereich des Sitzteilträgers angeordnet sind, sind im Bereich des Sitzteils selbst sowie der Rückenlehne mechanische Komponenten der Einstelleinrichtung vermieden, was insbesondere im Crashfall der Sicherheit dient, da der Sitzbenutzer sich dann an dahingehenden Mechanikkomponenten nicht verletzen kann.

Vorzugsweise ist dabei vorgesehen, daß in der aufrechten Lage der Rückenlehne die Armauflage der Armlehne im wesentlichen horizontal oder geringfügig nach vorn geneigt ist und daß bei vollständig zurückgeneigter Rückenlehne die Armauflage im wesentlichen parallel zur Rückenlehne verlaufend angeordnet ist. Somit ist auch in der Liege- bzw. Bettstellung des Fluggastsitzes eine entspannte Auflage der Arme möglich, die dann, was einem gesteigerten Sitzkomfort zugute kommt, im wesentlichen in einer Ebene mit dem Rumpfteil des Sitzbenutzers verlaufen.

Weitere vorteilhafte Ausgestaltungen sind Merkmale der sonstigen Unteransprüche.

Im folgenden wird der erfindungsgemäße Sitz anhand eines Ausführungsbeispiels in der Art eines Fluggastsitzes näher erläutert.

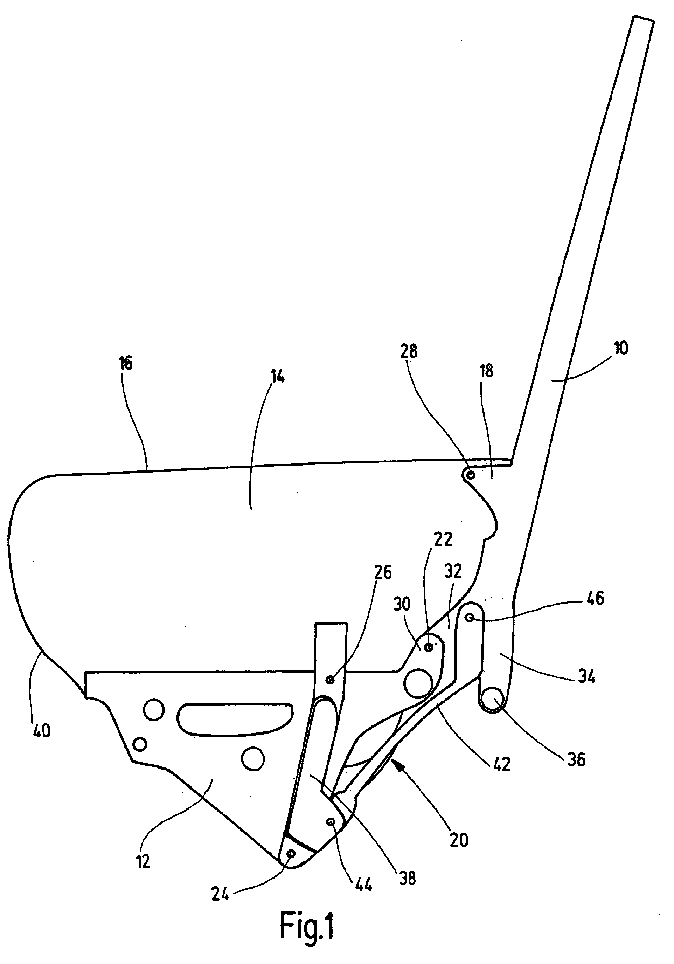

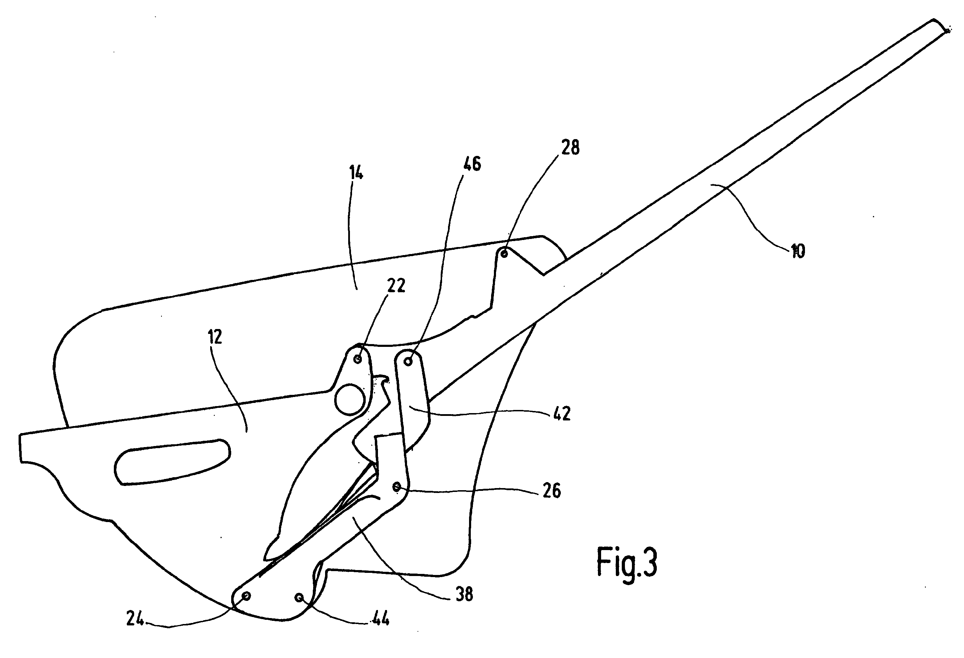

Dabei zeigen in prinzipieller und nicht maßstäblicher Darstellung die
- Fig.1 bis 4: in der Seitenansicht die wesentlichen Komponenten des Fluggastsitzes mit seiner Einstellmechanik, wobei die dem Betrachter zugewandte Armlehne weggelas- sen wurde und man demgemäß die dahinter liegende Einstellmechanik mit der darauffolgenden Armlehne sieht. Des weiteren wurden der besseren Darstellung wegen die Polsterung für die Rückenlehne und das Sitzteil weggelassen einschließlich etwaiger Aktuatoren und weiteren Einstellmöglichkeiten des Sitzes, sofern nicht die Einstellbewegung der Armlehne angespro- chen ist.

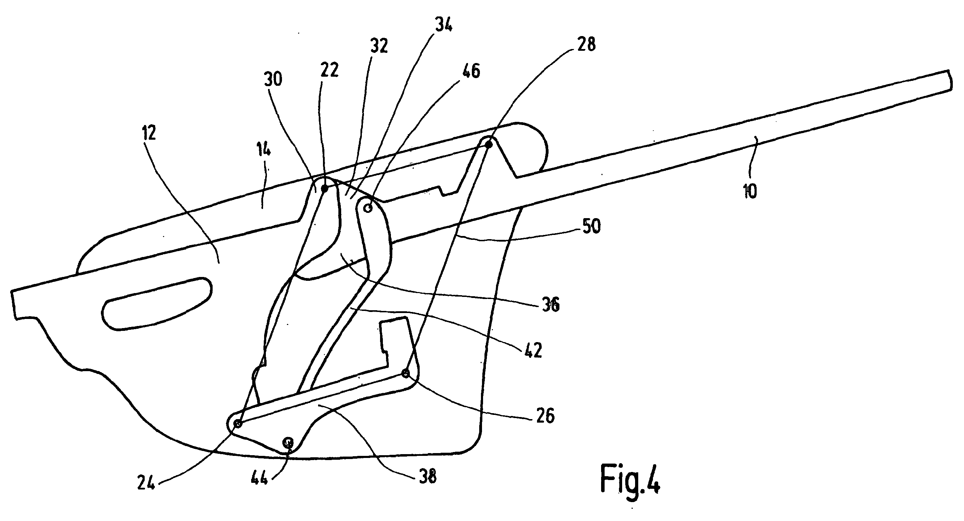

Die Fig.1 zeigt den Fluggastsitz in seiner aufgerichteten Position, bei der die Rückenlehne 10 nur über eine geringe Neigung verfügt. Ferner ist das Sitzteil in Form des gezeigten Sitzteilträgers 12 im wesentlichen horizontal verlaufend angeordnet und die jeweilige Armlehne 14 weist mit ihrer Armauflage 16 in horizontaler Richtung eine leichte nach vorn zur Sitzkante hin orientierte Neigung auf. Die Armlehne 14 ist mit ihrem in Blickrichtung auf die Fig.1 gesehen rechten oberen Ende an eine Vorkragung 18 der Rückenlehne 10 schwenkbar angelenkt. Eine als Ganzes mit 20 bezeichnete Einstellmechanik dient dazu, daß, wie dies insbesondere die Fig.1 bis 4 zeigen, mit zu- oder abnehmender Neigung der Rückenlehne 10 die Armlehne 14 kontinuierlich mitgeführt ist. Nimmt die Rückenlehne 10 ihre in der Fig.4 dargestellte vollständig zurückgeneigte Lage ein, verläuft aufgrund der Einstellmechanik 20 die Armauflage 16 im wesentlichen parallel zu der angesprochenen Rückenlehne 10 mit ihrer nicht näher dargestellten Polsterung und ist entsprechend nach unten hin in Richtung des Kabinenbodens gleichzeitig mit einer geringfügigen Neigung versehen.

Die angesprochene Einstellmechanik 20 weist zunächst vier Gelenkstellen 22,24,26 und 28 auf. Die erste Gelenkstelle 22 ist in Blickrichtung auf die Figuren gesehen an einer nach oben vorstehenden Verlängerung 30 am hinteren oberen Ende des Sitzteilträgers 12 angeordnet. Die dahingehende erste Gelenkstelle 22 bildet mithin eine erste Schwenkachse aus, an der das untere Ende der Rückenlehne 10 mit einem Gabelende 32 eines Gabelendstückes 34 angreift. Das andere Gabelende 36 des Gabelendstückes 34 dient dem Angriff eines nicht näher dargestellten Aktuators, beispielsweise in Form eines pneumatischen oder hydraulischen Arbeitszylinders oder eines elektromechanischen Stellantriebes, bei dessen Ansteuerung sich die Rückenlehne 10 in ihrer Neigung einstellen läßt und dergestalt über die Einstellmechanik 20 zwangsgeführt die sonstigen Sitzkomponenten, wie Sitzteilträger 12 und Armlehne 14, in ihrer Bewegung ansteuert.

Die zweite Gelenkstelle 24 ist am unteren Ende des längsverfahrbaren Sitzteilträgers 12 angeordnet und bildet dergestalt eine fixe ortsfeste Schwenkachse aus, an der das untere Ende eines Lenkerteils 38 angelenkt ist. Im Bereich des anderen freien Endes des Lenkerteils 38 ist die dritte Gelenkstelle 26 angeordnet, wobei die dahingehende Schwenkachse in die Armlehne 14 eingreift und dergestalt eine Führung für die zugeordnete, dem Betrachter zugewandte und nicht dargestellte Armlehne ausbildet. Da die Armlehne 14 in ihrem vorderen und unterem Bereich bogenförmig ausgebildet ist, kann der dahingehende bogenförmige Verlauf 40 zusätzlich oder alternativ Bestandteil einer weiteren Führung sein, die ansonsten durch einen inneren, nicht näher dargestellten Schienenverlauf des Sitzteilträgers 12 gebildet ist.

Des weiteren kann im Bereich der dritten Gelenkstelle 26 ein Aktuator (nicht dargestellt) angreifen, der die Bewegung der Einstellmechanik 20 veranlaßt und dergestalt die Neigungseinstellung der Komponenten erlaubt. Der dahingehende Aktuator kann zusätzlich oder anstelle des Aktuators treten, der an das Gabelendstück 34 der Rückenlehne 10 angelenkt ist. Die vierte Gelenkstelle 28 ist durch die Anlenkstelle der Armlehne 14 an die Rückenlehne 10 mit ihrer Vorkragung 18 gebildet.

Im Bereich der ortsfesten Gelenkstelle 24 des Lenkerteils 38 und zwischen den beiden freien Enden desselben greift an das Lenkerteil 38 ein Steuerteil 42 in Form einer Steuerstange mit seinem unteren freien Ende und mittels einer fünften Gelenkstelle 44 an. Mit seinem anderen freien Ende greift das Steuerteil 42 wiederum an der Rückenlehne 12 an, und zwar im Bereich des Gabelendstückes 34, und mithin in einem unteren Bereich der Rückenlehne 10 zwischen der ersten Gelenkstelle 22 und der vierten Gelenkstelle 28. Der dahingehende Angriff erfolgt über eine weitere sechste Gelenkstelle 46. Wie die Fig.1 bis 4 in ihrer Gesamtheit zeigen, verbleibt dabei in jeder Neigungseinstellung der Rückenlehne 10 die sechste Gelenkstelle 46 unterhalb der vierten Gelenkstelle 28, über die die Armlehne 14 im rückwärtigen Bereich mit der Rückenlehne 10 schwenkbar verbunden ist.

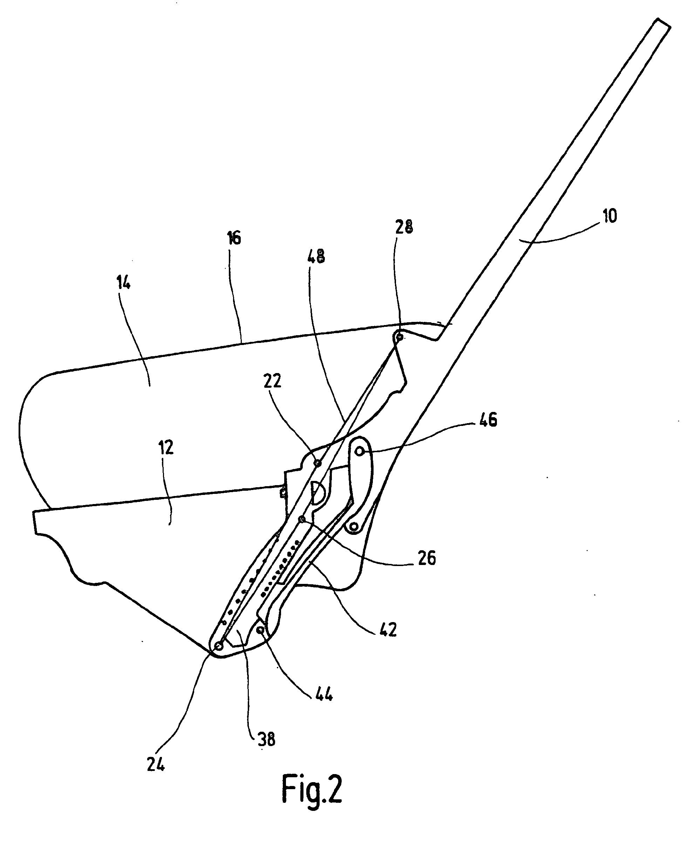

Wie sich insbesondere aus der Darstellung nach der Fig.2 ergibt, sind in einer Neigungseinstellung der Rückenlehne 10 zwischen ihrer aufrechten (Fig.1) und ihrer vollständig geneigten Lage (Fig.4) die vier Gelenkstellen 22,24,26,28 im wesentlichen entlang einer gemeinsamen Linie 48 bzw. innerhalb eines durch den Linienverlauf 48 in seiner Breite vorgebbaren Überdeckungsbereichs angeordnet, wobei dahingehend das Steuerteil 42 mit seiner sechsten Gelenkstelle 46 außerhalb dieser Linienführung 48 bzw. dieses Bereiches verbleibt. Die dahingehende Neigungseinstellsituation nach der Fig.2 entspricht einem gewissen Totpunktverhalten der Einstellmechanik, die eine Selbsthemmung in der Neigungseinstellung bewirken kann und aufgrund der Zwangsanlenkung über das stangenartige Steuerteil 42 ist es möglich, diesen Bereich zu überwinden, um beispielsweise die Rückenlehne 10 in eine aufrechte Neigungseinstellung nach der Fig.1 zu verbringen.

Im umgekehrten Falle, also bei weit zurückgeneigter Rückenlehne 10, wie dies in der Fig.4 dargestellt ist, spannen die vier Gelenkstellen 22,24,26,28 ein fiktives Parallelogramm 50 auf, in das dann das Steuerteil 42 gleichfalls unter Überwindung des Totpunktverhaltens mit seinem oberen freien Ende und mithin mit der sechsten Gelenkstelle 46 eingreift. Auf diese Art und Weise ist über das Steuerteil 42 in jeder Neigungseinstellage des Fluggastsitzes eine sichere zielgerichtete Ansteuerung ohne Hemmung möglich. Da, wie dies insbesondere die Fig.4 zeigt, in einer Ruhe- oder Bettposition des Fluggastsitzes alle wesentlichen Komponenten, wie Rückenlehne 10, Sitzteilträger 12 mit Sitzteil (nicht dargestellt) und die jeweilige Armauflage 16 der zuordenbaren Armlehne 14 eine gleichgerichtete Neigungseinstellung sowie Höhenlage einnehmen, ist ein hohes Maß an Sitzkomfort erreicht und auch Langstreckenflüge lassen sich dergestalt schonend und in ergonomisch günstiger Weise von einem Sitzbenutzer absolvieren. Dabei kann es vorgesehen sein, daß eine nicht näher dargestellte Bein- und Fußauflage der Neigungseinstellung der sonstigen Sitzkomponenten nachfolgt, so daß auch dergestalt im Beinbereich eine optimale Ruheposition für den Sitzbenutzer erreicht ist.

Der vorstehend beschriebene Fluggastsitz läßt sich von seiner konstruktiven Merkmalsausgestaltung auch ohne weiteres im Fahrzeugbereich einsetzen, beispielsweise im Bereich von Autofähren, Reisebussen od. dgl.. Eine weitere Anwendung ist im Bereich von medizinischen Behandlungsstühlen zu sehen, beispielsweise in Form eines OP-Stuhles oder -Tisches sowie für zahnärztliche Behandlungsmethoden. Im Sinne einer modularen Bauweise ist es mit der erfindungsgemäßen Lösung möglich, schnell die Armlehne abzunehmen und beispielsweise gegen eine neue oder anders geartete Armlehne auszutauschen, da der dahingehende Austauschvorgang von der Mechanik nicht behindert ist und im übrigen die Armlehne nur einen Anknüpfungspunkt zur Rückenlehne aufweist.

## Patentansprüche

1. Sitz, insbesondere Fahrzeugsitz, vorzugsweise Fluggastsitz, mit einem Sitzteil und einem Sitzteilträger (12), einer in der Neigung einstellbaren Rückenlehne (10) und mindestens einer Armlehne (14), wobei die jeweilige Armlehne (14) schwenkbar an der Rückenlehne (10) angelenkt ist, wobei über eine Einstellmechanik (20) mit zu- oder abnehmender Neigung der Rückenlehne (10) die Armlehne (14) kontinuierlich mitgeführt ist, wobei die Einstellmechanik (20) für die Armlehne (14) mindestens vier Gelenkstellen (22,24,26,28) aufweist, von denen die erste Gelenkstelle (22) am hinteren oberen Ende des Sitzteilträgers (12) angeordnet ist, die mithin eine erste Schwenkachse ausbildet, an der das untere Ende der Rückenlehne (10) angreift, **dadurch gekennzeichnet, daß** die zweite Gelenkstelle (24) am unteren Ende des Sitzteilträgers (12) angeordnet ist, an der ein Ende eines Lenkerteils (38) angeordnet ist, daß das gegenüberliegende Ende des Lenkerteils (38) eine bewegbare dritte Gelenkstelle (26) darstellt, die eine Führung für die Armlehne (14) bildet, daß die Anlenkung der Armlehne (14) an die Rückenlehne (10) die vierte Gelenkstelle (28) bildet, daß am Lenkerteil (38) im Bereich der zweiten Gelenkstelle (24) ein Steuerteil (42) mit einem Ende mittels einer fünften Gelenkstelle (44) angreift, daß das Steuerteil (42) mit seinem anderen freien Ende mittels einer weiteren sechsten Gelenkstelle (46) an der Rückenlehne angreift und daß in jeder Neigungseinstellung der Rückenlehne (10) die sechste Gelenkstelle (46) unterhalb der vierten Gelenkstelle (28) verbleibt, über die die Armlehne (14) mit der Rückenlehne (10) schwenkbar verbunden ist.

2. Sitz nach Anspruch 1, **dadurch gekennzeichnet, daß** in der aufrechten Lage der Rückenlehne (10) die Armauflage (16) der Armlehne (14) im wesentlichen horizontal oder geringfügig nach vorn geneigt ist und daß bei vollständig zurückgeneigter Rückenlehne (10) die Armauflage (16) im wesentlichen parallel zur Rückenlehne (10) verlaufend angeordnet ist.

3. Sitz nach Anspruch 1 oder 2, **dadurch gekennzeichnet, daß** in einer Neigungsstellung der Rückenlehne (10) zwischen ihrer aufrechten und vollständig geneigten Lage die vier Gelenkstellen (22,24,26,28) im wesentlichen entlang einer gemeinsamen Linie (48) oder innerhalb eines in seiner Breite vorgebbaren Überdeckungsbereiches angeordnet sind und daß das Steuerteil (42) außerhalb dieser Linie bzw. dieses Bereiches verbleibt.

4. Sitz nach einem der Ansprüche 1 bis 3 **dadurch gekennzeichnet, daß** mit zunehmender Neigung der Rückenlehne (10) die vier Gelenkstellen (22,24,26,28) ein fiktives Parallelogramm (50) aufspannen, in das das Steuerteil (42) zumindest teilweise mit der sechsten Gelenkstelle (46) eingreift, mittels der das Steuerteil (42) an ein unteres Endteil der Rükkenlehne (10) angelenkt ist.

5. Sitz nach einem der Ansprüche 1 bis 4, **dadurch gekennzeichnet, daß** das untere Endteil der Rückenlehne (10) in ein Gabelendstück (34) mündet, an dem eine der Gelenkstellen (22) der Einstellmechanik (20) angeordnet ist sowie das eine freie Ende des Steuerteils (42) mittels der sechsten Gelenkstelle (46) angreift.

6. Sitz nach einem der Ansprüche 1 bis 5, **dadurch gekennzeichnet, daß** der Sitzteilträger (12) mittels der Einstellmechanik (20) der Neigungseinstellung von Rückenlehne (10) und Armlehne (14) folgt und daß der Sitzteilträger (12) zumindest teilweise eine Führung für die Bewegung der Armlehne (14) ausbildet.

7. Sitz nach Anspruch 5 oder 6, **dadurch gekennzeichnet, daß** mindestens ein Aktuator zum Betätigen der Einstellmechanik (20) an der Rückenlehne (10) und/oder an dem Unterteil (38) angreift.

## Claims

1. Seat, in particular vehicle seat, preferably aircraft passenger seat, with a seat part and a seat part support (12), a backrest (10) which can be adjusted in inclination, and at least one arm rest (14), wherein the respective arm rest (14) is coupled pivotably to the backrest (10), wherein the arm rest (14) is moved continuously via an adjustment mechanism (20) as the inclination of the backrest (10) increases or decreases, wherein the adjustment mechanism (20) for the arm rest (14) has at least four hinge points (22, 24, 26, 28) of which the first hinge point (22) is arranged at the rear upper end of the seat part support (12) and consequently forms a first pivot spindle on which the lower end of the backrest (10) acts, **characterized in that** the second hinge point (24) is arranged at the lower end of the seat part support (12) and one end of a link part (38) is arranged thereon, **in that** the opposite end of the link part (38) constitutes a movable third hinge point (26) which forms a guide for the arm rest (14), **in that** the coupling of the arm rest (14) to the backrest (10) forms the fourth hinge point (28), **in that** one end of a control part (42) acts by means of a fifth hinge point (44) on the link part (38) in the region of the second hinge point (24), **in that** the other, free end of the control part (42) acts on the backrest by means of a further sixth hinge point (46), and **in that**, in every inclination adjustment of the backrest (10), the sixth hinge point (46) remains below the fourth hinge point (28) via which the arm rest (14) is connected pivotably to the backrest (10).

2. Seat according to Claim 1, **characterized in that,** in the upright position of the backrest (10), the arm support (16) of the arm rest (14) is substantially horizontal or is inclined slightly forwards, and **in that**, when the backrest (10) is fully reclined, the arm support (16) is arranged such that it runs substantially parallel to the backrest (10).

3. Seat according to Claim 1 or 2, **characterized in that,** in an inclination position of the backrest (10) between its upright and fully inclined position, the four hinge points (22, 24, 26, 28) are arranged substantially along a common line (48) or within an overlapping region of predeterminable width, and **in that** the control part (42) remains outside said line or said region.

4. Seat according to one of Claims 1 to 3, **characterized in that,** as the backrest (10) is increasingly inclined, the four hinge points (22, 24, 26, 28) define a fictitious parallelogram (50) in which the control part (42) at least partially engages by means of the sixth hinge point (46) which is used to couple the control part (42) to a lower end part of the backrest (10).

5. Seat according to one of Claims 1 to 4, **characterized in that** the lower end part of the backrest (10) opens into a fork end piece (34) on which one of the hinge points (22) of the adjustment mechanism (20) is arranged and on which the one free end of the control part (42) acts by means of the sixth hinge point (42).

6. Seat according to one of Claims 1 to 5, **characterized in that** the seat part support (12) follows the inclination adjustment of the backrest (10) and arm rest (14) by means of the adjustment mechanism (20), and **in that** the seat part support (12) at least partially forms a guide for the movement of the arm rest (14).

7. Seat according to Claim 5 or 6, **characterized in that** at least one actuator acts on the backrest (10) and/or on the lower part (38) in order to actuate the adjustment mechanism (20).

## Revendications

1. Siège, en particulier siège de véhicule, de préférence siège de passager aérien, avec une partie d'assise et un support de partie d'assise (12), un dossier (10) à inclinaison réglable, et au moins un accoudoir (14), dans lequel l'accoudoir respectif (14) est articulé de manière pivotante au dossier (10), dans lequel l'accoudoir (14) est entraîné en continu par un mécanisme de réglage (20) en accompagnement de l'inclinaison croissante ou décroissante du dossier (10), dans lequel le mécanisme de réglage (20) pour l'accoudoir (14) comprend au moins quatre points d'articulation (22, 24, 26, 28), dont le premier point d'articulation (22) est disposé sur l'extrémité supérieure arrière du support de partie d'assise (12), et forme ainsi un premier axe de pivotement auquel est attachée l'extrémité inférieure du dossier (10), **caractérisé en ce que** le deuxième point d'articulation (24) est disposé à l'extrémité inférieure du support de partie d'assise (12) et une extrémité d'une pièce de bielle (38) est disposée sur celui-ci, **en ce que** l'extrémité opposée de la pièce de bielle (38) représente un troisième point mobile d'articulation (26), qui forme un guidage pour l'accoudoir (14), **en ce que** l'articulation de l'accoudoir (14) au dossier (10) forme le quatrième point d'articulation (28), **en ce qu'**une pièce de commande (42) est attachée par une extrémité à la pièce de bielle (38) dans la région du deuxième point d'articulation (24) au moyen d'un cinquième point d'articulation (44), **en ce que** la pièce de commande (42) est attachée par son autre extrémité libre au dossier au moyen d'un sixième point d'articulation (46), et **en ce que**, dans chaque position d'inclinaison du dossier (10), le sixième point d'articulation (46) reste en dessous du quatrième point d'articulation (28), par lequel l'accoudoir (14) est relié de manière pivotante au dossier (10).

2. Siège selon la revendication 1, **caractérisé en ce que,** dans la position redressée du dossier (10), l'appui de bras (16) de l'accoudoir (14) est essentiellement horizontal ou légèrement incliné vers l'avant, et **en ce que**, dans la position complètement inclinée vers l'arrière du dossier (10), l'appui de bras (16) est disposé en direction essentiellement parallèle au dossier (10).

3. Siège selon la revendication 1 ou 2, **caractérisé en ce que,** dans une position inclinée du dossier (10) entre sa position redressée et sa position complètement inclinée, les quatre points d'articulation (22, 24, 26, 28) sont disposés essentiellement le long d'une ligne commune (48) ou à l'intérieur d'une zone de recouvrement de largeur prédéterminable et **en ce que** la pièce de commande (42) reste à l'extérieur de cette ligne ou de cette zone.

4. Siège selon l'une quelconque des revendications 1 à 3, **caractérisé en ce que,** lorsque l'inclinaison du dossier (10) augmente, les quatre points d'articulation (22, 24, 26, 28) définissent un parallélogramme fictif (50), dans lequel la pièce de commande (42) agit au moins en partie avec le sixième point d'articulation (46), au moyen duquel la pièce de commande (42) est articulée à une partie d'extrémité inférieure du dossier (10).

5. Siège selon l'une quelconque des revendications 1 à 4, **caractérisé en ce que** la partie d'extrémité inférieure du dossier (10) se termine par une pièce en forme de fourche (34), sur laquelle un des points d'articulation (22) du mécanisme de réglage (20) est disposé et sur laquelle une extrémité libre de la pièce de commande (42) est attachée au moyen du sixième point d'articulation (46).

6. Siège selon l'une quelconque des revendications 1 à 5, **caractérisé en ce que** le support de partie d'assise (12) suit la position d'inclinaison du dossier (10) et de l'accoudoir (14) au moyen du mécanisme de réglage (20) et **en ce que** le support de partie d'assise (12) forme au moins en partie un guidage pour le mouvement de l'accoudoir (14).

7. Siège selon la revendication 5 ou 6, **caractérisé en ce qu'**au moins un actionneur permettant d'actionner le mécanisme de réglage (20) est attaché au dossier (10) et/ou à la partie inférieure (38).
